# EUROPEAN PATENT SPECIFICATION

(11) **EP 4 112 901 B1**
(45) Date of publication and mention of the grant of the patent: **07.05.2025**
(21) Application number: 21183498.1
(22) Date of filing: 02.07.2021
(51) Int. Cl.: F01P 3/18, F28F 9/00, B60K 11/04, F28F 9/02, F28D 1/04, F01P 11/10

(54) **SEALING ELEMENT FOR HEAT EXCHANGERS IN A COOLING MODULE**
DICHTUNGSELEMENT FÜR WÄRMETAUSCHER IN EINEM KÜHLMODUL
ÉLÉMENT D'ÉTANCHÉITÉ POUR ÉCHANGEURS DE CHALEUR DANS UN MODULE DE REFROIDISSEMENT

(43) Date of publication of application: 04.01.2023
(73) Proprietor: Valeo Autosystemy SP. Z.O.O., 32-050 Skawina (PL)
(72) Inventor: GODZINA, Radoslaw, 32 050 Skawina (PL); NAWROCKI, Mateusz, 32 050 Skawina (PL)
(74) Representative: Valeo Systèmes Thermiques

(56) References cited:
- WO-A1-03/074849
- FR-A1- 3 070 321
- GB-A- 2 373 571
- US-A1- 2011 127 005
- US-B1- 6 470 961

## Description

The present invention generally relates to a cooling module having heat exchangers, more particularly to a symmetrical sealing for sealing between heat exchangers in a cooling module.

A cooling module, in general, is provided in a vehicle to control thermal comfort of passengers and for thermal management of various elements in the vehicle, such as engine, electric motors etc. The cooling module may be disposed at the front end of the vehicle in such a way the ram air passes through the cooling module. The cooling module may include one or more heat exchangers arranged one after another with respect to the front end of the vehicle, so that the ram air can pass through the heat exchangers one by one. The heat exchangers are stacked together in such a way one heat exchanger is downstream with respect to another, so that the ram air may pass subsequently through the heat exchangers. In one example, the heat exchangers can be a plurality of radiators and a condenser. In another example, the cooling module may have at least one radiator, an oil cooler and a condenser. For instance, the condenser may be arranged upstream to the radiator(s)/oil cooler with respect to the ram airflow, so that the ram air passes through the condenser first, followed by the radiator(s)/oil cooler.

To avoid escaping of the ram air through a gap between the heat exchangers, sealing elements may be provided between the heat exchanger. Such sealing elements may also prevent entering of any foreign particles into the gap between the heat exchangers. For instance, the sealing elements may include plastic enclosures and other sealing components for sealing the gaps. The plastic enclosures may seal the gap between the condenser and one of the radiators, whereas the sealing components may seal rest of the gaps between the radiators. However, such technique is inefficient as it may require multiple elements to seal the gaps between the heat exchangers that detrimentally increases cost and time to install the sealing elements into the cooling module. Such plastic enclosures may need to be bolted to the side plates of the heat exchangers. As a result, cost and complexity of the cooling module is increased.

Therefore, there remains a need for a cooling module having heat exchangers provided with a sealing element adapted to seal gap between the heat exchanger. There remains another need for a simple design of a sealing element adapted to be coupled to the heat exchangers of a cooling module without any connecting means.

Document GB2373571A discloses a cooling module according to the preamble of claim 1.

In the present description, some elements or parameters may be indexed, such as a first element and a second element. In this case, unless stated otherwise, this indexation is only meant to differentiate and name elements, which are similar but not identical. No idea of priority should be inferred from such indexation, as these terms may be switched without betraying the invention. Additionally, this indexation does not imply any order in mounting or use of the elements of the invention.

In view of the foregoing, an embodiment provides a cooling module for a vehicle. The cooling module include a first heat exchanger having at least one side plate, at least two second heat exchangers and a sealing element. The second heat exchangers are arranged on opposite sides of the first heat exchanger, and each heat exchanger includes at least one second side plate. Further, the sealing element includes a central part and at least two flaps attached to the opposite sides of the central part. Further, the central part is attached to the first heat exchanger and each flap is adapted to engage with the second side plate of the respective second heat exchanger.

Further, each flap extends in a first direction substantially away from the first side plate of the first heat exchanger.

In one example, each flap includes at least one protruding part protruding towards the second side plate of the second heat exchangers in a direction substantially perpendicular to the first direction.

Further, the protruding part is adapted to engage with the second side plate of the respective second heat exchanger in a tensioned stage against respective second heat exchanger.

In one example, the flaps further includes an overmold element overmolded on the edges of the flaps to restrict egressing of fluid from the cooling module through a space formed between the first heat exchanger and the second heat exchangers.

Further, the central part includes a snap-fit assembly adapted to engage with the first side plate of the first heat exchanger.

Further, the snap-fit assembly includes at least one resilient member having at least one L-shaped leg adapted to engage with a foot portion of the first side plate of the first heat exchanger, when the sealing element is coupled to the first heat exchanger.

Generally, one end of the flaps is attached to the respective resilient member and other end of the flaps is adapted to engage with the second side plates of the respective second heat exchanger in a tensioned state against the respective second heat exchanger.

Further, the flaps are adapted to engage with at least one second foot portion of the second side plate of each of the second heat exchanger.

In one embodiment, the sealing element includes at least one auxiliary flap formed on any one of a front lateral side and a rear lateral side of the central part of the sealing element and the auxiliary flap is adapted to be rested on manifolds of the first heat exchanger.

Generally, the flaps and the central part of the sealing element is integrally formed thereon.

In one example, the sealing element further includes at least one rib formed on a top side of the central part of the sealing element and the rib is adapted to couple with external elements.

In one embodiment, the sealing element is formed along the length of the core of the first heat exchanger and the second heat exchangers.

In another embodiment, the sealing element extends beyond the length of the core of the first heat exchanger and the second heat exchangers.

In yet another embodiment, the length of the sealing element is shorter than the length of the core of the first heat exchanger and the second heat exchangers.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
Fig. 1 illustrates a schematic view of a cooling module having heat exchangers;
Fig. 2 illustrates an exploded view of the heat exchangers of Fig. 1 with a sealing element;
Fig. 3 illustrates a sectional view of the heat exchangers of Fig. 1 when the sealing element of Fig. 2 is mounted on the side-plates of the heat exchangers;
Fig. 4 shows a schematic view of the sealing element of the Fig. 2;
Fig. 5 illustrates a sectional view of the sealing element of Figs. 2-4, when the sealing element is in a free state and mounted on the heat exchangers;
Fig. 6 illustrates a schematic view of the sealing element for the heat exchangers, in accordance with another embodiment of the present invention.

It must be noted that the figures disclose the invention in a detailed enough way to be implemented, the figures helping to better define the invention. The invention should however not be limited to the embodiments disclosed in the description.

The present invention relates to a cooling module having heat exchangers with at least one sealing element to seal gaps between heat exchangers. Conventionally, the gap between heat exchangers are sealed by multiple elements such as plastic enclosures and sealing components. Such method require multiple components and such components need to be bolted to the heat exchangers. Here, the plastic enclosure may seal the gap between first and second heat exchangers, whereas other sealing components may seal the gap between the second and third exchangers. Ultimately, cost and time required to assemble the cooling module is increased. As the sealing components are bolted to the heat exchangers, it may inadvertently cause any damage to the heat exchanger core. To avoid such problems, a sealing element is developed that can be inserted onto the heat exchangers to seal gap between heat exchangers. The sealing element can be snap-fitted on the at least one heat exchanger, so as the seal the gaps between the heat exchangers. Further, design and position of the sealing element are described with respect to following figures.

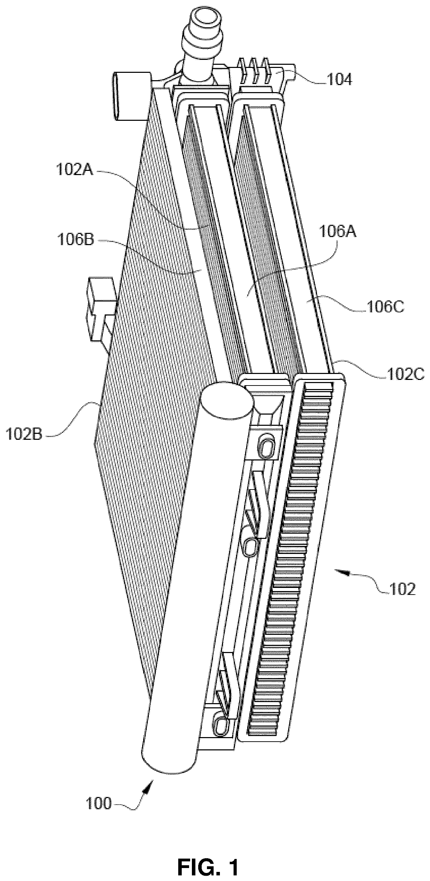

Fig. 1 illustrates a schematic view of a cooling module 100 having heat exchangers 102, in accordance with an embodiment of the present invention. The cooling module 100 may be disposed at a front end of a vehicle. Generally, the cooling module 100 is provided in the vehicle to manage thermal conditions of various elements in the vehicle such as engine, motors, battery and/or passenger's comfort. The cooling module 100 is disposed in the vehicle in such a way that the ram air may pass through the cooling module 100 so as to exchange heat with fluid flowing there-through. The cooling module 100 includes the heat exchangers 102. Here, the heat exchangers 102 are air-cooled heat exchangers, i.e., the ram air is used to cool the fluid flowing through the heat exchangers 102. The cooling module 100 may include one or more heat exchangers arranged one next to the other as shown in Fig. 1. For instance, the cooling module 100 may include a first heat exchanger 102A and at least two-second heat exchangers 102B-C. The first heat exchanger 102 and the second heat exchangers 102B-C are arranged one by one. Particularly, the second heat exchangers 102B-C are arranged on opposite sides of the first heat exchanger 102A. In other words, the first heat exchanger 102A is sandwiched between the second heat exchangers 102B-C.

In one example, the first heat exchanger 102A is a radiator, one of the second heat exchangers 102B is a condenser, and another second heat exchanger 102C is an oil cooler. In another example, the first heat exchanger 102A and one of the second heat exchanger 102C are radiators, and another second heat exchanger 102B is a condenser. In both cases, the heat exchangers 102 include their respective heat exchange tubes through which respective heat exchange fluids flow there-through. Each heat exchanger 102 includes the heat exchange tubes extended between their respective headers. Here, the fluid flows into the respective heat exchange tubes and the ram air flows around the heat exchange tubes, thereby enabling heat exchange between the fluids and ram air. Further, the flow direction of the fluids is generally transverse to the flow direction of the ram air. Further, the heat exchangers 102 may be provided with tanks adapted to couple to the respective header of the heat exchangers 102. The tanks 104 may enable circulation of the heat exchange fluid inside the heat exchange tubes of the heat exchangers 102A-C. The tanks 104 may be crimped to the headers of the respective heat exchanger 102. In one example, the tank of the first heat exchanger 102A may be physically connected to the tank of the second heat exchanger 102B, to provide rigid connection between the heat exchangers 102 in the cooling module 100. Here, the header and the tanks are collectively referred to as manifolds.

Further, the heat exchangers 102 include their respective side plates stacked on their respective heat exchange tubes. Generally, the side plates in the heat exchanger 100 are to provide support to the heat exchange tubes and it acts as a support to add fins around the outermost heat exchange tubes in the heat exchanger 100. Particularly, the first heat exchanger 102A includes at least one first side-plate 106A; preferably, a pair of first side-plates 106A adapted to sandwich the heat exchange tubes in the first heat exchanger 102A. Further, the second heat exchangers 102B-C include at least one second side-plate 106B-C sandwich the respective heat exchange tubes in the second heat exchangers 102B-C. The first side-plates 106A are the outermost plate in the stack of heat exchange tubes in the first heat exchanger 102A and the second side-plates 104B-C are the outermost plate in the respective stack of heat exchange tubes in the second heat exchanger 102B-C. Further, the heat exchange tubes along with the side plates and the headers are referred to as core of the heat exchangers 102.

The heat exchangers 102 may be placed in the cooling module 100 in such a way that the headers and the tanks 104 of each heat exchanger 102 are in contact with each other, so as to block passing of the ram air there-between. For example, the headers and tanks of the first heat exchanger 102A is in contact with the headers and tanks of the second heat exchanger 102B so that there is no possibility of escaping of the ram air between the headers of the heat exchangers 102. However, while assembling the heat exchangers 102 in the cooling module 100, a gap between the heat exchangers 102 is inadvertently formed near the side-plates 106A-C of the heat exchangers 102A-C. Such gaps can be sealed by a sealing element (not shown in Fig. 1).

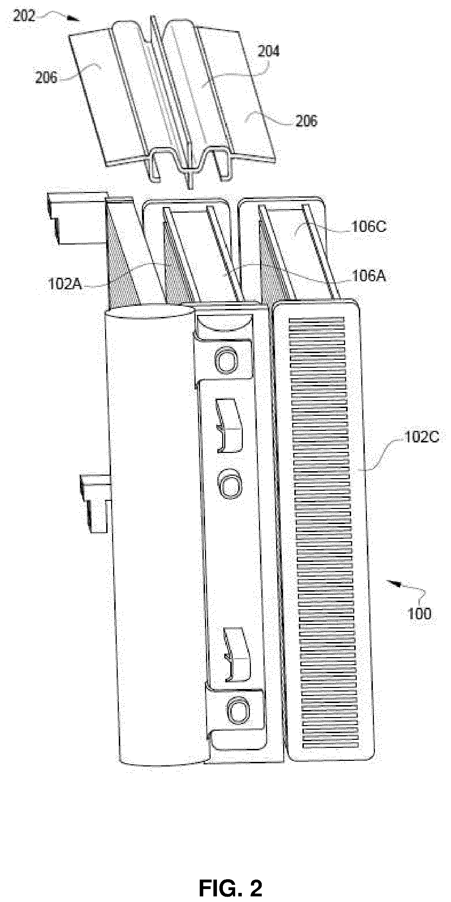

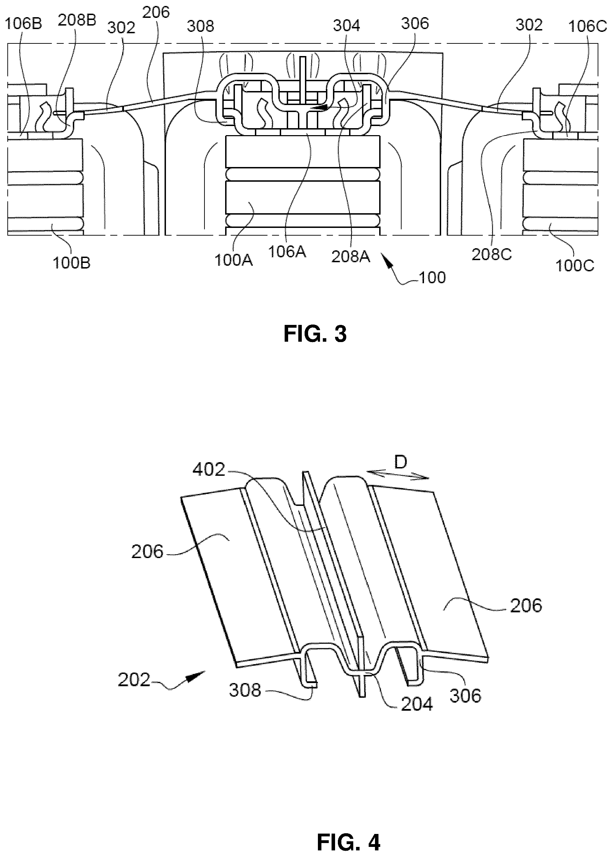

Figs. 2 and 3 illustrate schematic views of the heat exchangers 102A-C of Fig. 1 with the sealing element 202. Here, Fig. 3 is a sectional view of the heat exchangers 102A-C when the sealing element 202 is mounted on the side-plates 106A-C of the heat exchangers 102A-C. Further, Fig. 4 shows a schematic view of the sealing element 202 of the Fig. 2. In this example, the cooling module 100 includes at least one sealing element 202 adapted to seal the gaps between the heat exchangers 102A-C. In the preferred embodiment, the cooling module 100 includes a pair of sealing elements 202 adapted to seal the gaps formed between the heat exchanger 102A-C at the both sides the heat exchangers 102A-C at their of the side-plates 106A-C. Although Fig. 2 shows one sealing element 202 adapted to seal the gap between one-side of the heat exchangers 102A-C, it is possible to apply similar sealing element to other side of the heat exchangers 102A-C. For sake of clarity and brevity, the heat exchangers 102A-C are explained with the sealing element 202 at one side of the heat exchangers 102A-C as shown in Fig. 2.

The sealing element 202 includes a central part 204 and at least two flaps 206 attached to the opposite sides of the central part 204. In one example, the sealing element 202 may include more than two flaps 206, preferably four flaps attached to the four sides of the central part 204. This embodiment will be shown in the forthcoming figures. Here, the two flaps 206 are referred to as the main flaps. According to previous embodiment, the flaps 206 may be connected to the lateral sides of the central part 204 of the sealing element 202. In one example, the flaps 206 may be formed along the length of the central part 204 of the sealing element 202. Here, the each flap 206 extends in a first direction "D" substantially away from the first side-plate 106A of the first heat exchanger 102A. In other words, the flaps 206 extend away from the central part 204 of the sealing element 202 so that the flaps 206 may seal the gap between the first side-plate 106A of the first heat exchanger 102A and the second side-plates 106B-C of the second heat exchangers 102B-C, when the sealing element 202 is assembled on the heat exchangers 102A-C.

Further, the central part 204 is attached the first heat exchanger 102A. Preferably, the central part 204 of the sealing element 202 is adapted to be detachably attached to the first side-plates 106A of the first heat exchanger 102A. Meanwhile, the flaps 206 are adapted to engage with the second side-plates 106B-C of the second heat exchangers 102B-C. The flaps 206 can extend in a direction towards the second side-plates 106B-C of the second heat exchangers 102B-C. Particularly, one flap 206 of the sealing element 202 extends towards the second side-plate 106B of the second heat exchanger 102B, and another flap 206 extends towards the second side-plate 106C of the second heat exchanger 102C. Hence, the flaps 206 can block the gap between the side-plates 106A-C of the first and second heat exchanger 102A-C, thereby blocking the ram air from escaping through the gap between the first side-plates 106A and the second side-plates 106B-C.

In one example, the central part 204 and the flaps 206 of the sealing element 202 are integrally formed thereon. In other words, the central part 204 and the flaps 206 are integrally molded to form the sealing element 202. In a preferred embodiment, the sealing element 202 is formed along the length of the core of the first and second heat exchangers 102A-C. Particularly, the central part 204 of the sealing element 202 is formed along the length of the core of the first heat exchanger 102A and the flaps 206 of the sealing element 202 are formed along the length of the core of the second heat exchangers 102B-C. In another example, the central part 204 is formed to a length lesser than the length of the core of the first heat exchanger 102A, whereas the flaps 206 of the sealing element 202 are formed along the length of the core of the second heat exchangers 102B-C.

In another embodiment, the sealing element 202 extends beyond the length of the core of the first and second heat exchangers 102A-C. In such case, the central part 204 of the sealing element 202 extends beyond the length of the core of the first heat exchanger 102A, and the flaps 206 of the sealing element 202 extend beyond the length of the core of the second heat exchangers 102B-C. In another example, the central part 204 of the sealing element 202 is formed along the length of the core of the first heat exchanger 102A, whereas the flaps 206 of the sealing element 202 extend beyond the length of the core of the second heat exchangers 102B-C.

In another embodiment, the length of the sealing element 202 is shorter than the length of the core of the first and second heat exchangers 102A-C. Particularly, the length of the central part 204 of the sealing element 202 is shorter than the length of the core of the first heat exchanger 102A, whereas the length of the flaps 206 of the sealing element 202 is equal to the length of the core of the second heat exchangers102B-C. In another example, the length of the central part 204 of the sealing element 202 is shorter than the length of the core of the first heat exchanger 102A, whereas the length of the flaps 206 of the sealing element 202 is shorter than the length of the core of the second heat exchangers102B-C.

Further, the flaps 206 may include an overmold element 302 overmolded on the flaps 206 to restrict egressing of fluid from the cooling module 100 through a space formed between the first heat exchanger 102A and the second heat exchangers 102B-C. In one example, the overmold element 302 is overmolded on the edges of the flaps 206 of the sealing element 202. In another example, the overmold element 302 is overmolded throughout the area of the flaps 206 of the sealing element 202.

In one embodiment, the central part 204 of the sealing element 202 includes a snap-fit assembly 304 adapted to engage with the first side-plate 106A of the first heat exchanger 102A. Further, the snap-fit assembly 304 is formed on the bottom side of the central part 204. The first and second side-plates 106A-C may include foot portions 208A-C to receive the snap-fit assembly 304 of the sealing element 202. The snap-fit assembly 304 further includes at least one resilient member 306, preferably a pair of resilient members 306, adapted to engage with the first foot portion 208A of the first side-plate 106A of the first heat exchanger 102A. Particularly, the resilient members 306 formed on a side of the central part 204 facing the first side-plate 106A of the first heat exchanger 102A. In one example, the resilient members 306 may include at least one L-shaped leg 308, preferably a pair of L-shaped legs 308, adapted to engage with the first foot portion 208A of the first side-plate 106A of the first heat exchanger 102A, when the central part 204 of the sealing element 202 is coupled to the first heat exchanger 102A. Meanwhile, edges of the both flaps 206 of the sealing element 202 are engaged to respective foot portion 208B-C of the second heat exchangers 102B-C as shown in Fig. 3. As the sealing element 202 is provided with the snap-fit assembly 304, the sealing element 202 can be mounted on the heat exchangers without any external connecting means.

In one example, one end of the flaps 206 is attached to the respective resilient member 306 and another end of the flaps 206 is engaged to the second side-plates 106B-C of the second heat exchangers 102B-C in a tensioned state against respective second heat exchanger 102B-C, when the sealing element 202 is coupled on the heat exchangers 102A-C. As the flaps 206 of the sealing element 202 are disposed on the heat exchangers 102A-C in a tensioned state against the respective second heat exchanger 102B-C, the flaps 206 of the sealing element 202 may effectively block egressing of the ram air between the heat exchangers 102A-C. Also, the flaps 206 can be rigid due to the flaps 206 positioned in a tensioned state. In one example, the flaps 206 bear against the side plates 106B, 106C in a tensioned state without direct fixing.

Further, the sealing element 202 includes at least one rib 402 formed on a top side of the central part 204 as shown in Figs. 2-4. The rib 402 is adapted to couple with the external elements outside the cooling module 100 to provide stability to the sealing element 202. Further, the rib 402 is formed on a longitudinal direction along the direction of extension of the heat exchange tubes in the heat exchangers 102A-C. In one example, as shown in Fig. 4, the rib 402 is formed along the length of the central part 204 of the sealing element 202. In another example, the length of the rib 402 is shorter than the length of the central part 204 of the sealing element 202.

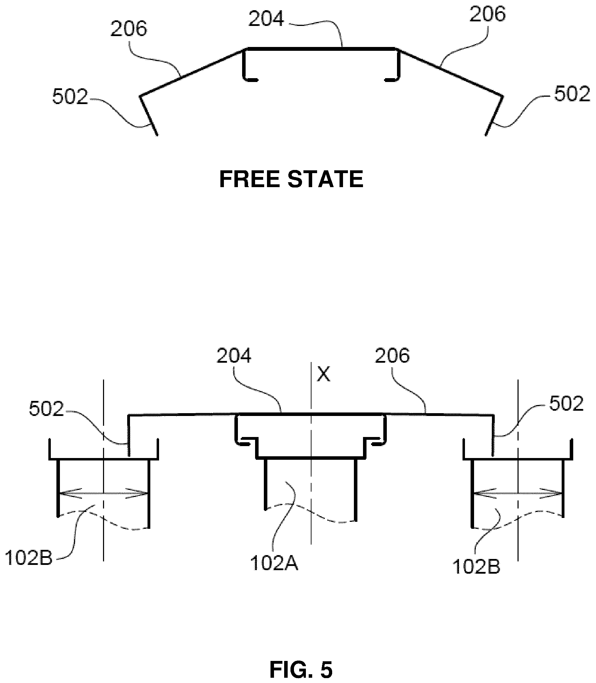

Fig. 5 illustrates a sectional view of the sealing element 202 of Figs. 2-4, when the sealing element 202 is in a free state and mounted on the heat exchangers 102A-C. In one embodiment, each flap 206 of the sealing element 202 includes at least one protruding part 502 protruding towards the respective second side-plate 106B-C of the second heat exchangers 102B-C in a direction substantially perpendicular to the first direction "D" of the flaps 206. In one example, the protruding parts 502 may be formed along the length of the flaps 206 of the sealing element 202. As indicated with FREE STATE visualisation of the sealing element 202 before assembly in Fig. 5, the protruding parts 502 provided in the flaps 206 of the sealing element 202 may be pointing towards the first side-plate 106A of the first heat exchanger 102A, i.e. be inclined with respect to the central part 204 to ensure tensioned arrangement after assembly. When the sealing element 202 is assembled to the heat exchangers 102A-C, the protruding parts 502 of the sealing element 202 engage with the second side-plates 106B-C of the second heat exchangers 102B-C as shown in Fig. 5. In both states, the protruding parts 502 of the sealing element 202 are substantially perpendicular to the extension direction of the flaps 206 of the sealing element 202. Here, the protruding parts 502 of the sealing element 202 are adapted to deflect towards the second heat exchangers 102B-C and engage with the second side-plate 106B-C of the respective second heat exchanger 102B-C in a tensioned stage against respective second heat exchanger 102B-C, when the sealing element 202 is assembled on the heat exchangers 102A-C. As a result, the flaps 206 of the sealing element 202 can be rigidly connected to the second heat exchangers 102B-C.

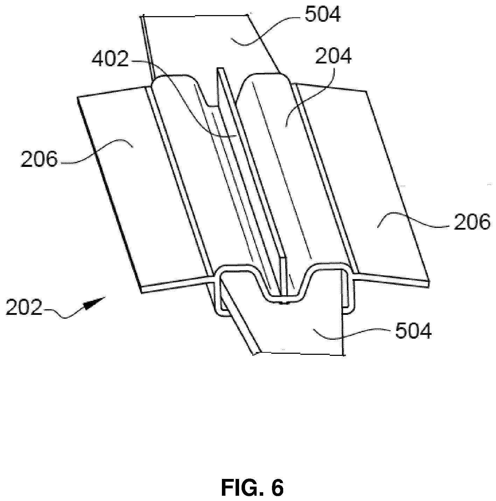

Fig. 6 illustrates a schematic view of the sealing element 202 for the heat exchangers 102A-C, in accordance with another embodiment of the present invention. According to the present embodiment, the sealing element 202 of the cooling module 100 further includes at least one auxiliary flap 504, preferably a pair of auxiliary flaps 504, formed the lateral sides of the central part 204 of the sealing element 202. The auxiliary flaps 504 formed on the central part 204 at the sides that is adjacent to the main flaps 206. The auxiliary flaps 504 of the sealing element 202 may be rested on the manifolds of the first heat exchanger 102A, when the sealing element 202 is mounted on the heat exchangers 102A-C. Particularly, the auxiliary flaps 504 of the sealing element 202 may restrict any leakage of ram air between the heat exchangers 102A-C at the manifolds. As the main flaps 206 and auxiliary flaps 504 of the sealing element 202 is disposed on the heat exchangers 102A-C in a tensioned state against the respective second heat exchanger 102B-C, the flaps 206 of the sealing element 202 may effectively block egressing of the ram air between the heat exchangers 102A-C and the flaps 206 can be rigid.

All the above-described embodiments are just to explain the present invention while more embodiments and combinations thereof might exist. Hence, the present invention should not be limited to the above-described embodiments alone.

## Claims

1. A cooling module (100) comprising:
a first heat exchanger (102A) comprising at least one first side plate (106A);
at least two second heat exchangers (102B-C) arranged on opposite sides of the first heat exchanger (102A), each second heat exchanger (102B-C) comprising at least one second side plate (106B-C); and
at least one sealing element (202) having a central part (204) and at least two flaps (206) attached to the opposite sides of the central part (204), wherein the central part (204) is attached to the first heat exchanger (102A)
**characterised in that** each flap (206) is adapted to engage with the second side plate (106B-C) of the respective second heat exchanger (102B-C).

2. The cooling module (100) according to claim 1, wherein each flap (206) extends in a first direction "D" substantially away from the first side plate (106A) of the first heat exchanger (102A).

3. The cooling module (100) according to any of the preceding claims , wherein each flap (206) comprises at least one protruding part (502) protruding towards the second side plate (106B-C) of the second heat exchangers (102B-C) in a direction substantially perpendicular to the first direction "D".

4. The cooling module (100) according to claim 3, wherein the protruding part (502) is adapted to engage with the second side plate (106B-C) of the respective second heat exchanger (102B-C) in a tensioned stage against respective second heat exchanger (102B-C).

5. The cooling module (100) according to any of the preceding claims, wherein the flaps (206) further comprises an overmold element (302) overmolded on the edges of the flaps (206) to restrict egressing of fluid from the cooling module (100) through a space formed between the first heat exchanger (102A) and the second heat exchangers (106B-C).

6. The cooling module (100) according to any of the preceding claims, wherein the central part (204) includes a snap-fit assembly (304) adapted to engage with the first side plate (106A) of the first heat exchanger (102A).

7. The cooling module (100) according to claim 6, wherein the snap-fit assembly (304) further comprises at least one resilient member (306) having at least one L-shaped leg (308) adapted to engage with a foot portion (208A) of the first side plate (106A) of the first heat exchanger (102A), when the sealing element (202) is coupled to the first heat exchanger (102A).

8. The cooling module (100) according to the preceding claim, wherein one end of the flaps (206) is attached to the respective resilient member (306) and other end of the flaps (206) is adapted to engage with the second side plates (106B-C) of the respective second heat exchanger (102B-C) in a tensioned state against the respective second heat exchanger (102B-C).

9. The cooling module (100) according to the preceding claim, wherein the flaps (206) are adapted to engage with at least one second foot portion (208B) of the second side plate (106B-C) of each of the second heat exchanger (102B-C).

10. The cooling module (100) according any of the preceding claims, further comprising at least one auxiliary flap (504) formed on any one of a front lateral side and a rear lateral side of the central part (204) of the sealing element (202), wherein the auxiliary flap (504) is adapted to be rested on manifolds of the first heat exchanger (102A).

11. The cooling module (100) according to any of the preceding claims, wherein the flaps (206) and the central part (204) of the sealing element (202) is integrally formed thereon.

12. The cooling module (100) according to any of the preceding claims, further comprising at least one rib (402) formed on a top side of the central part (204) of the sealing element (202), wherein the rib (402) is adapted to couple with external elements.

13. The cooling module (100) according to any of the preceding claims, wherein the sealing element (202) is formed along the length of the core of the first heat exchanger (102A) and the second heat exchangers (106B-C).

14. The cooling module (100) according to any of claim 1 to 12, wherein the sealing element (202) extends beyond the length of the core of the first heat exchanger (102A) and the second heat exchangers (106B-C).

15. The cooling module (100) according to any of claim 1 to 12, wherein the length of the sealing element (202) is shorter than the length of the core of the first heat exchanger (102A) and the second heat exchangers (106B-C).

## Patentansprüche

1. Kühlmodul (100), das Folgendes umfasst:
einen ersten Wärmetauscher (102A), der mindestens eine erste Seitenplatte (106A) umfasst;
mindestens zwei zweite Wärmetauscher (102B-C), die auf entgegengesetzten Seiten des ersten Wärmetauschers (102A) angeordnet sind, wobei jeder zweite Wärmetauscher (102B-C) mindestens eine zweite Seitenplatte (106B-C) umfasst; und
mindestens ein Dichtungselement (202) mit einem Mittelteil (204) und mindestens zwei Klappen (206), die an den entgegengesetzten Seiten des Mittelteils (204) angebracht sind, wobei der Mittelteil (204) an dem ersten Wärmetauscher (102A) angebracht ist, **dadurch gekennzeichnet, dass** jede Klappe (206) dazu ausgelegt ist, mit der zweiten Seitenplatte (106B-C) des jeweiligen zweiten Wärmetauschers (102B-C) in Eingriff zu kommen.

2. Kühlmodul (100) nach Anspruch 1, wobei sich jede Klappe (206) in einer ersten Richtung "D" im Wesentlichen weg von der ersten Seitenplatte (106A) des ersten Wärmetauschers (102A) erstreckt.

3. Kühlmodul (100) nach einem der vorausgehenden Ansprüche, wobei jede Klappe (206) mindestens einen vorstehenden Teil (502) umfasst, der hin zu den zweiten Seitenplatten (106B-C) der zweiten Wärmetauscher (102B-C) in einer Richtung im Wesentlichen senkrecht zur ersten Richtung "D" vorsteht.

4. Kühlmodul (100) nach Anspruch 3, wobei der vorstehende Teil (502) dazu ausgelegt ist, in einer gespannten Phase gegen den jeweiligen zweiten Wärmetauscher (102B-C) mit der zweiten Seitenplatte (106B-C) des jeweiligen zweiten Wärmetauschers (102B-C) in Eingriff zu kommen.

5. Kühlmodul (100) nach einem der vorausgehenden Ansprüche, wobei die Klappen (206) ferner ein Umspritzungselement (302) umfassen, das auf den Kanten der Klappen (206) umspritzt ist, um ein Austreten von Fluid aus dem Kühlmodul (100) durch einen Raum zu beschränken, der zwischen dem ersten Wärmetauscher (102A) und den zweiten Wärmetauschern (106B-C) gebildet ist.

6. Kühlmodul (100) nach einem der vorausgehenden Ansprüche, wobei der Mittelteil (204) eine Schnappverschlussanordnung (304) umfasst, die dazu ausgelegt ist, mit der ersten Seitenplatte (106A) des ersten Wärmetauschers (102A) in Eingriff zu kommen.

7. Kühlmodul (100) nach Anspruch 6, wobei die Schnappverschlussanordnung (304) ferner mindestens ein elastisches Glied (306) mit mindestens einem L-förmigen Schenkel (308) umfasst, der dazu ausgelegt ist, mit einem Fußabschnitt (208A) der ersten Seitenplatte (106A) des ersten Wärmetauschers (102A) in Eingriff zu kommen, wenn das Dichtungselement (202) mit dem ersten Wärmetauscher (102A) gekoppelt ist.

8. Kühlmodul (100) nach dem vorausgehenden Anspruch, wobei ein Ende der Klappen (206) an dem jeweiligen elastischen Glied (306) angebracht ist und ein anderes Ende der Klappen (206) dazu ausgelegt ist, in einem gespannten Zustand gegen den jeweiligen zweiten Wärmetauscher (102B-C) mit den zweiten Seitenplatten (106B-C) des jeweiligen zweiten Wärmetauschers (102B-C) in Eingriff zu kommen.

9. Kühlmodul (100) nach dem vorausgehenden Anspruch, wobei die Klappen (206) dazu ausgelegt sind, mit mindestens einem zweiten Fußabschnitt (208B) der zweiten Seitenplatte (106B-C) jedes des zweiten Wärmetauschers (102B-C) in Eingriff zu kommen.

10. Kühlmodul (100) nach einem der vorausgehenden Ansprüche, ferner umfassend mindestens eine Hilfsklappe (504), die auf einer beliebigen einer vorderen lateralen Seite oder einer hinteren lateralen Seite des Mittelteils (204) des Dichtungselements (202) gebildet ist, wobei die Hilfsklappe (504) dazu ausgelegt ist, auf Stutzen des ersten Wärmetauschers (102A) aufzuliegen.

11. Kühlmodul (100) nach einem der vorausgehenden Ansprüche, wobei die Klappen (206) und der Mittelteil (204) des Dichtungselements (202) integral darauf gebildet sind.

12. Kühlmodul (100) nach einem der vorausgehenden Ansprüche, ferner umfassend mindestens eine Rippe (402), die auf einer Oberseite des Mittelteils (204) des Dichtungselements (202) gebildet ist, wobei die Rippe (402) dazu ausgelegt ist, mit externen Elementen gekoppelt zu werden.

13. Kühlmodul (100) nach einem der vorausgehenden Ansprüche, wobei das Dichtungselement (202) entlang der Länge des Kerns des ersten Wärmetauschers (102A) und der zweiten Wärmetauscher (106B-C) gebildet ist.

14. Kühlmodul (100) nach einem der Ansprüche 1 bis 12, wobei sich das Dichtungselement (202) über die Länge des Kerns des ersten Wärmetauschers (102A) und der zweiten Wärmetauscher (106B-C) hinaus erstreckt.

15. Kühlmodul (100) nach einem der Ansprüche 1 bis 12, wobei die Länge des Dichtungselements (202) kürzer als die Länge des Kerns des ersten Wärmetauschers (102A) und der zweiten Wärmetauscher (106B-C) ist.

## Revendications

1. Module de refroidissement (100) comprenant :
un premier échangeur de chaleur (102A) comprenant au moins une première plaque de côté (106A) ;
au moins deux deuxièmes échangeurs de chaleur (102B-C) agencés sur des côtés opposés du premier échangeur de chaleur (102A), chaque deuxième échangeur de chaleur (102B-C) comprenant au moins une deuxième plaque de côté (106B-C) ; et
au moins un élément d'étanchéité (202) ayant une partie centrale (204) et au moins deux volets (206) attachés aux côtés opposés de la partie centrale (204), la partie centrale (204) étant attachée au premier échangeur de chaleur (102A), **caractérisé en ce que** chaque volet (206) est conçu pour se mettre en prise avec la deuxième plaque de côté (106B-C) du deuxième échangeur de chaleur (102B-C) respectif.

2. Module de refroidissement (100) selon la revendication 1, dans lequel chaque volet (206) s'étend dans une première direction « D » substantiellement à l'écart de la première plaque de côté (106A) du premier échangeur de chaleur (102A).

3. Module de refroidissement (100) selon l'une quelconque des revendications précédentes, dans lequel chaque volet (206) comprend au moins une partie en saillie (502) faisant saillie vers la deuxième plaque de côté (106B-C) des deuxièmes échangeurs de chaleur (102B-C) dans une direction substantiellement perpendiculaire à la première direction « D ».

4. Module de refroidissement (100) selon la revendication 3, dans lequel la partie en saillie (502) est conçue pour se mettre en prise avec la deuxième plaque de côté (106B-C) du deuxième échangeur de chaleur (102B-C) respectif dans une étape tendue contre un deuxième échangeur de chaleur (102B-C) respectif.

5. Module de refroidissement (100) selon l'une quelconque des revendications précédentes, dans lequel les volets (206) comprennent en outre un élément de surmoulage (302) surmoulé sur les bords des volets (206) pour limiter la sortie de fluide du module de refroidissement (100) à travers un espace formé entre le premier échangeur de chaleur (102A) et les deuxièmes échangeurs de chaleur (106B-C).

6. Module de refroidissement (100) selon l'une quelconque des revendications précédentes, dans lequel la partie centrale (204) inclut un ensemble d'encliquetage (304) conçu pour se mettre en prise avec la première plaque de côté (106A) du premier échangeur de chaleur (102A).

7. Module de refroidissement (100) selon la revendication 6, dans lequel l'ensemble d'encliquetage (304) comprend en outre au moins un élément élastique (306) ayant au moins une patte en forme de L (308) conçue pour se mettre en prise avec une portion de pied (208A) de la première plaque de côté (106A) du premier échangeur de chaleur (102A), lorsque l'élément d'étanchéité (202) est couplé au premier échangeur de chaleur (102A).

8. Module de refroidissement (100) selon la revendication précédente, dans lequel une extrémité des volets (206) est attachée à l'élément élastique (306) respectif et une autre extrémité des volets (206) est conçue pour se mettre en prise avec les deuxièmes plaques de côté (106B-C) du deuxième échangeur de chaleur (102B-C) respectif dans un état tendu contre le deuxième échangeur de chaleur (102B-C) respectif.

9. Module de refroidissement (100) selon la revendication précédente, dans lequel les volets (206) sont conçus pour se mettre en prise avec au moins une deuxième portion de pied (208B) de la deuxième plaque de côté (106B-C) de chacun des deuxièmes échangeurs de chaleur (102B-C).

10. Module de refroidissement (100) selon l'une quelconque des revendications précédentes, comprenant en outre au moins un volet auxiliaire (504) formé sur l'un quelconque d'un côté latéral avant et d'un côté latéral arrière de la partie centrale (204) de l'élément d'étanchéité (202), le volet auxiliaire (504) étant conçu pour reposer sur des collecteurs du premier échangeur de chaleur (102A).

11. Module de refroidissement (100) selon l'une quelconque des revendications précédentes, dans lequel les volets (206) et la partie centrale (204) de l'élément d'étanchéité (202) sont formés d'un seul tenant sur celui-ci.

12. Module de refroidissement (100) selon l'une quelconque des revendications précédentes, comprenant en outre au moins une nervure (402) formée sur un côté supérieur de la partie centrale (204) de l'élément d'étanchéité (202), la nervure (402) étant conçue pour se coupler avec des éléments externes.

13. Module de refroidissement (100) selon l'une quelconque des revendications précédentes, dans lequel l'élément d'étanchéité (202) est formé le long de la longueur du noyau du premier échangeur de chaleur (102A) et des deuxièmes échangeurs de chaleur (106B-C).

14. Module de refroidissement (100) selon l'une quelconque des revendications 1 à 12, dans lequel l'élément d'étanchéité (202) s'étend au-delà de la longueur du noyau du premier échangeur de chaleur (102A) et des deuxièmes échangeurs de chaleur (106B-C).

15. Module de refroidissement (100) selon l'une quelconque des revendications 1 à 12, dans lequel la longueur de l'élément d'étanchéité (202) est plus courte que la longueur du noyau du premier échangeur de chaleur (102A) et des deuxièmes échangeurs de chaleur (106B-C).
